# EUROPEAN PATENT APPLICATION

(11) **EP 4 339 681 A1**
(43) Date of publication of application: **20.03.2024**
(21) Application number: 23197062.5
(22) Date of filing: 13.09.2023
(51) Int. Cl.: G02B 21/36, G02B 27/00, G02B 27/01, G06F 3/01, G09G 3/00

(54) **DEVICE FOR AN IMAGING SYSTEM, OCULAR, DISPLAY APPARATUS, IMAGING SYSTEM, METHOD AND COMPUTER PROGRAM**

(30) Priority: 16.09.2022 DE 102022123852
(71) Applicant: Leica Instruments (Singapore) Pte Ltd, Singapore 608924 (SG)
(72) Inventor: PAULUS, Robert, 88145 Hergatz (DE)
(74) Representative: 2SPL Patentanwälte PartG mbB

(57) **Abstract**

A device 130 for controlling a perceived resolution of an imaging system is provided. The device 130 comprises interface circuitry 132 configured to communicate with a display device 148 of the imaging system and a processing circuitry 134 configured to control the interface circuitry 132. Further, the processing circuitry 134 is configured to obtain information about a desired brightness change of a light source of the display device 148 and to adjust a brightness of the light source based on the information to control the perceived resolution of a display of the display device 148.

## Description

### Technical field

Examples relate to a device for an imaging system, an ocular, a display apparatus, an imaging system, a method and a computer program.

### Background

The numerical aperture and therefore the resolution of an optical system, such like a microscope, can be defined by an aperture stop. The aperture stop is typically arranged inside the optical system. This aperture stop is sometimes flexible in its diameter (e.g., the diameter of an iris). However, an aperture stop cannot be integrated into each optical system or component of an optical system. For example, an eyepiece of a microscope magnifies the intermediate image but has no impact on the resolution of the system, since this is defined by the microscope. Thus, there may be a need to control a resolution of an optical system, such like an imaging system.

### Summary

It is a finding that a resolution of an imaging system can be controlled by obtaining information about a desired brightness of a light source of a display device of the imaging system. For example, the user's perceived resolution of the imaging system can be increased by determining the desired brightness of the light source. The desired brightness may depend on a desired perceived resolution of a display of the display device of the imaging system, which can be adjusted by adjusting the brightness of the light source. In this way, the brightness of the light source can be adjusted to increase a perceived resolution of the display.

Examples provide a device for controlling a perceived resolution of an imaging system, comprising interface circuitry configured to communicate with a display device of the imaging system and a processing circuitry configured to control the interface circuitry. Further, the processing circuitry is configured to obtain information about a desired brightness change of a light source of the display device and adjust a brightness of the light source based on the information to control the perceived resolution of a display of the display device. In this way, the device can adjust the brightness of the light source to increase a perceived resolution, e.g., a resolution perceived by a user, of the display of the display device. For example, the brightness of the light source may be increased such that a pupil of a user adapts to the brightness resulting in an improved perceived resolution of the display . In this way, the perceived resolution of the display of the imaging system can be controlled. Thus, an experience of a user using the imaging system can be increased. For example, the information may be obtained by receiving an output signal from the eye-tracking sensor indicative of a status of an eye of a user.

In an example, the information may be obtained by an input of a user (e.g., via an input device). In this way, the user can provide feedback about an experience, e.g., if the brightness of the light source of the display device is too bright or too dark. Thus, the experience of the user can be increased by adjusting the light source's brightness to increase the resolution of the display with respect to the user's perception.

In an example, the interface circuitry may be further configured to communicate with an eye-tracking sensor. Further, the information may be obtained by receiving an output signal comprising information indicative of a status of an eye of a user viewing the display from the eye-tracking sensor. In this way, the brightness of the light source can be adjusted with respect to the user, e.g. a distance between an eye of the user and the display.

In an example, the output signal comprises information indicative of a diameter of a pupil of the user. In this way, the brightness of the light source can be adjusted with respect to the pupil of the user. Thus, the perceived resolution of the imaging system can be controlled by using the pupil of the eye of the user as aperture stop. For example, the perceived resolution of the display can be controlled by adjusting a diameter of the pupil of the user's eye by adjusting the brightness of the light source.

In an example, the processing circuity may be further configured to reobtain the information about a desired brightness change by a second output signal of the eye-tracking sensor after adjusting the brightness of the light source and to adjust the brightness of the light source until a predefined value of the diameter of the pupil of the user is reached. In this way, a predefined value for the perceived resolution of the display can be adjusted.

In an example, the processing circuitry may be further configured to reobtain information about a desired brightness change after adjusting the brightness of the light source and if the information indicates a further need of an adjustment of the light source to readjust the brightness of the light source. In this way, an input of the user can be considered for adjusting the light source if an adjusted brightness of the light source decreases an experience of the user. For example, there may be a tradeoff between perceived resolution and a perceived distracting brightness, which can be adjusted by use of the input of the user.

In an example, the imaging system may be at least one of a surgical imaging system or a microscope system.

Examples provide an ocular for an imaging system, comprising an eye-tracking sensor and interface circuitry configured to transmit a measurement signal comprising information indicative of an output signal of the eye-tracking sensor to a device as described above.

Examples provide a display apparatus, comprising a device as described above and an eye-tracking sensor. In an example, the display apparatus may be at least one of a head-mounted display or a monitor communicatively connectable to a microscope. In this way, a perceived resolution of a specific display of a display device, such like a digital eyepiece, can be (automatically) controlled in a specific use case, e.g., during a surgical procedure. Especially in a use case in which the user cannot adjust the perceived resolution on its own.

Examples provide an imaging system comprising a device as described above and an ocular as described above with a display device or a display apparatus.

In an example, the imaging system may further comprise a sensor for determining an illumination of a surrounding of the display. Further, the processing circuity may be further configured to receive information from the sensor and to adjust the brightness of the display based on the information of the sensor. In this way, the surrounding of the display can be considered for calculating a needed diameter of the pupil of the user to achieve a desired perceived resolution of the display.

In an example, the processing circuity may be further configured to obtain information about a distance between a user pupil and the display of the display device and adjust the brightness of the display based on the information about the distance. In this way, the brightness can be adapted to an advantageously focal point of the user.

Examples provide a method for controlling a perceived resolution of an imaging system, comprising obtaining information about a desired brightness change of a display of a display device and adjusting a brightness of the display based on the information.

Examples further relate to a computer program having a program code for performing the method described above, when the computer program is executed on a computer, a processor, or a programmable hardware component.

### Short description of the Figures

Some examples of apparatuses and/or methods will be described in the following by way of example only, and with reference to the accompanying figures, in which
Fig. 1a, 1b show a block diagram of an example of a device and an imaging system;
Fig. 2 shows a block diagram of an example of an ocular;
Fig. 3 shows a block diagram of an example of a display apparatus;
Fig.4 shows an example of a method;
Figs. 5a, 5b show examples of other methods; and
Fig. 6 shows a schematic illustration of a system.

### Detailed Description

Various examples will now be described more fully with reference to the accompanying drawings in which some examples are illustrated. In the figures, the thicknesses of lines, layers and/or regions may be exaggerated for clarity.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

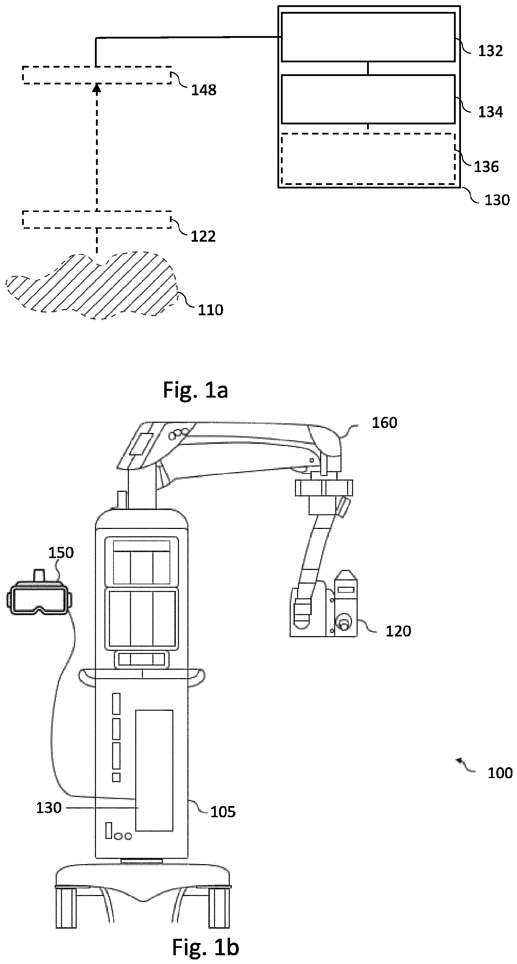

Figs. 1a shows a schematic diagram of an example of a device 130 for controlling a perceived resolution of an imaging system. The device 130 is tasked with controlling various aspects of a microscope of an imaging system (shown in Fig. 1b), which may be a surgical imaging system and/or with processing various types of sensor data of the imaging system. Consequently, the device 130 may be implemented as a computer system, which interfaces with various components of the imaging system.

The device 130 comprises, as shown in Fig. 1a, interface circuitry 132 and processing circuitry 134. Optionally, the device 130 may further comprise a storage device 136. The processing circuitry 134 is (communicatively) coupled to the one or more interface 132 and to the optional storage device 136. In general, the functionality of the device 130 is provided by the processing circuitry 134, in conjunction with the interface circuitry 132 (for exchanging information, e.g., with at least one optical imaging sensor 122 of a microscope, a display device 148, e.g., of a surgical imaging system (see Fig. 1b), an eye-tracking sensor) and/or the optional storage device 136 (for storing and/or retrieving information).

The processing circuitry 134 is configured to obtain information about a desired brightness change of a light source of the display device 148 and to adjust a brightness of the light source based on the information. Thus, the brightness of the light source can be adjusted, e.g., to improve an experience of a user. For example, the brightness of the light source may be adjusted such that the user does not recognize an individual pixel of the display of the display device 148. In this way, a perceived resolution of the display can be controlled to increase the experience of the user.

The proposed concept is built around two main components - a microscope, which comprises the optical components, and which houses a display device 148 being used to view the sample 110, and the device 130. The device 130 may be used to control the imaging system comprising the microscope, process sensor data of the imaging system, e.g., of the sensor 122, to generate a display signal for the display device 148 of the imaging system and to adjust a brightness of the light source based on the obtained information (e.g., by generating the display signal).

In general, a microscope part of the imaging system, is an optical instrument that is suitable for examining objects that are too small to be examined by the human eye (alone). For example, a microscope may provide an optical magnification of a sample, such as a sample 110 shown in Fig. 1a. In modern microscopes, the optical magnification is often provided for a camera or an imaging sensor, such as the optical imaging sensor 122. The microscope may further comprise one or more optical magnification components that are used to magnify a view of the sample, such as an objective (e.g., a lens).

There are a variety of different types of microscopes. If the microscope is used in the medical or biological fields, the sample 110 being viewed through the microscope may be a sample of organic tissue, e.g., arranged within a petri dish or present in a part of a body of a patient. In some examples of the present disclosure, e.g., as shown in Fig. 1b, the microscope may be a microscope of a surgical imaging system, i.e., a microscope that is to be used during a surgical procedure, such as an oncological surgical procedure or during tumor surgery. Accordingly, the object being viewed through the microscope, and shown in the image data, may be a sample of organic tissue of a patient, and may be in particular be the surgical site that the surgeon operates on during the surgical procedure. However, the proposed concept may also be applied to other types of microscopes, e.g., microscope in a laboratory or microscope for the purpose of material inspection.

Fig. 1b shows a schematic diagram of an example of a surgical imaging system 100 comprising a microscope 120, the device 130 and a display device 150. In general, a (surgical) imaging system is a system that comprises the microscope 120 and additional components, which are operated together with the microscope 120, such as the device 130 and the display device 150.

The surgical imaging system 100 shown in Fig. 1b comprises a number of optional components, such as a base unit 105 (comprising the device 130) with a stand, a head-mounted display 150 and a (robotic or manual) arm 160 which holds the microscope 120 in place, and which is coupled to the base unit 105 and to the microscope 120. In general, these optional and non-optional components may be coupled to the device 130, which may be configured to control and/or interact with the respective components.

While the proposed concept can be used with microscopes that support a fully optical view of the sample through a primary pair of oculars (e.g., as an alternative), the following examples assume that a digital view on a sample is provided. Various examples of the present disclosure thus relate to an imaging system 100 with a digital microscope, i.e., a microscope that uses imaging sensor data generated by at least one optical imaging sensor to generate a digital view of the sample, and to generate a display signal to provide the digital view to the digital viewer or viewers (e.g., the head-mounted display 150). In particular, the device 130 may be configured to obtain imaging sensor data from at least one optical imaging sensor of the microscope 120. The device 130 may be configured to provide the digital view of the sample, and to generate a display signal or multiple display signals for the display device 150 of the imaging system 100 to show the digital view of the sample.

In Fig. 1b, the surgical imaging system 100 is shown with a head-mounted display 150, which may be virtual-, augmented- or mixed-reality reality goggles, which may also be used by the main surgeon or by the assistant (or another assistant). For example, the head-mounted display 150 may be a display device that is to be worn by a person, e.g., the main surgeon or an assistant, on or around the head, such that one or two displays of the display device are arranged in front of the eye or eyes of the person.

As can be seen from Fig. 1a the device 130 for controlling a perceived resolution of an imaging system comprises interface circuitry 132 and processing circuitry 134. The interface circuitry 132 is configured to communicate with a display device 148 of the imaging system and optionally with an eye-tracking sensor. The processing circuitry 134 is configured to control the interface circuitry and to obtain information about a desired brightness change of a light source of the display device 148 and to adjust a brightness of the light source based on the information.

The light source may be a part or may be the display of the display device 148. Alternatively, the light source may be separated from the display. In this way, the perceived resolution of the display can be controlled without changing a parameter of the display.

For example, the interface circuitry 132 may be configured to receive information about a desired brightness change of a light source of the display device 148. The processing circuitry 134 may be configured to generate data for controlling the light source of the display device 148 to adjust a brightness of the light source of the display device 148 based on the information. For example, the processing circuitry 134 may generate a display signal comprising data for controlling the display device 148 and the interface circuitry 132 may transmit the display signal to the display device 148, e.g., an interface circuitry of the display device 148. The display device 148 may comprise a processing circuitry to process the display signal and to adjust the brightness of the light source. In this way, the processing circuitry 134 of the device 130 can adjust the brightness of the light source by generating data indicative of a brightness of the light source.

The information about a desired brightness can be obtained by an eye-tracking sensor and/or by a user input. In an example, the information is obtained by receiving, from the eye-tracking sensor, an output signal (e.g., a first output signal for a first adjustment/initial adjustment of the brightness of the light source) comprising information indicative of a status of an eye of a user viewing the light source and/or the display. The output signal may comprise sensor data of the eye-tracking sensor, e.g., raw data, which could be processed by the processing circuitry 134 or already processed data comprising parameters of the eye of the user, e.g., a pupil diameter, a blink rate, a movement of the eye. In this way, the brightness can be adjusted based on the information about the eye of the user.

In an example, the output signal comprises information indicative of a diameter of a pupil of the user. The eye of the user adapts its pupil diameter automatically depending on the intensity of the detected light, e.g., radiated by the display of the display device 148. For example, for a bright scenery the pupil diameter is reduced and for a dark scenery the pupil diameter is increased. The pupil diameter can change typically from 1.5mm to 8mm. Thus, the brightness of the light source can be adjusted to effect or adjust the pupil diameter of the eye of the user and thus to control the perceived resolution of the display.

Since the pupil diameter can be changed by changing the brightness of the light source the perceived resolution of the display can be controlled by utilizing the pupil of the user as aperture stop. For example, the pupil of the eye of the user may provide the aperture stop or can serve as an aperture to control the light intensity incident on the retina of the eye. Thus, by adjusting the brightness of the light source the pupil diameter can be adjusted and therefore a perceived resolution of the display can be controlled. For example, by increasing the brightness of the light source the pupil diameter of the eye of the user can be decreased and thus a perceived resolution of the display can be decreased. In this way, a recognition by the user of a single pixel of the display can be omitted, which can increase the experience of the user. Vice versa, by decreasing the brightness of the light source the pupil diameter of the eye of the user can be increased and thus a perceived resolution of the display can be increased.

For example, the device 130 can be used in combination with different optical components of an imaging system which do not comprise an aperture, e.g., such like a (compact) digital eyepiece for viewing the image on a monitor, a head-mounted display. The relationship of brightness of the light source and the pupil diameter can be used to control the optical resolution of a whole (optical) system. The whole (optical) system may comprise the display, the eye of the user (providing the aperture stop), and an optical component, e.g., a monitor, a head-mounted display. In this way, the whole (optical) system can be kept in a status where enough resolution is generated but not too much to make aberrations and/or pixel of the display visible. For example, the imaging system may interact with the pupil of the eye of the user to achieve a desired perceived resolution of the display for the user. Thus, a tradeoff between perceived resolution of the display and aberration and/or single pixel visibility can be controlled by adjusting the brightness of the light source.

An experience of the user can be optimized by adjusting the brightness of the light source while using the impression of the user, e.g., the status of the eye of the user and/or the user input. Changing the brightness of the light source while observing the performance of the display (visibility of pixels /aberrations) by observing the eye of the user and/or the user input may result in an improved experience of the user.

For example, the pupil diameter of the eye of the user can be detected with an eye-tracking sensor. With this information the brightness of the light source can be controlled to keep the pupil diameter close to a target value to achieve an optimized user experience. For example, the target value may be determined by a distance of the pupil of the user to the display of the display device 148. For example, this distance may be fixed, e.g., for a head-mounted display.

For example, the eye-tracking sensor can be used to determine the pupil diameter of both eyes of the user. In this way, the brightness of the light source can be controlled to keep the pupil diameter of both eyes close to a target value. In this way, a reliability can be increased.

For example, the display device may comprise a first display and a second display. The first display may be for a first eye of the user and the second display may be for a second eye of the user. Further, a first eye-tracking sensor associated with the first display may provide information about a desired brightness of the first display. A second eye-tracking sensor associated with the second display device may provide information about a desired brightness of the second display device. Thus, the device 130 can control a perceived resolution of the first display independently from the second display. In this way, the perceived resolution of the imaging system can be improved by considering each eye.

An adjustment of the brightness of the light source or a check whether the brightness leads to the target value of the pupil diameter can be done frequently. Optionally, a brightness change of an image displayed in the display can be considered. Alternatively or optionally the brightness of the display may be controlled by an illumination of the sample 110 in the imaging system. For example, the sample 110 can be more illuminated by an illumination source of the imaging system, which may result in a brighter displayed image and thus to an increase of the brightness of the display. In this way, the brightness of the display can be adjusted by controlling the illumination source of the imaging system. For example, the processing circuitry 134 may generate a control signal comprising the data for controlling the illumination source and the interface circuitry 132 may transmit the control signal to illumination source, e.g., an interface circuitry of the illumination source. Note that for this option the auto exposure of a detecting camera, e.g., the imaging sensor 122, has to be inactive.

In an example, the information may be obtained by an input of a user (e.g., via an input device). For example, the user may provide feedback to an actual brightness of the light source using, e.g., an input device, such like a handheld, a touchscreen, a keyboard. The interface circuitry 132 may receive a signal from the input device comprising information indicative of a desired brightness change. In this way, the user can transmit information indicative of a desired brightness change of the light source, e.g., the user can transmit a request to revoke a previous adjustment of the brightness, increase a brightness, decrease a brightness.

In an example, the processing circuity may be further configured to reobtain the information about a desired brightness change by a second output signal of the eye-tracking sensor after adjusting the brightness of the light source and to adjust the brightness of the light source until a predefined (target) value of the diameter of the pupil of the user is reached. For example, the interface circuitry 132 may receive from the eye-tracking sensor a first output signal to adjust the brightness (e.g., initial adjustment) of the light source as described above (by generating a first display signal). After an adjustment of the light source the interface circuitry 132 may receive from the eye-tracking sensor a second output signal comprising information indicative of a status of the eye of the user after the prior adjustment of the brightness of the light source. If the information indicates a need for a further adjustment of the brightness, e.g., because a target value of the pupil diameter is not reached, the processing circuitry 134 may generate a second display signal based on the second output signal to adjust the brightness of the light source. In this way, the brightness can be adapted until a target value is reached, e.g., a predefined pupil diameter (determined based on a distance between the display and the eye of the user) and/or no user input in a predefined time.

Alternatively or optionally, the second output signal of the eye-tracking sensor may be used for revocation of an adjustment of the light source, e.g., without reaching a target value. For example, the second output signal may comprise information indicative of a blink rate of an eye of a user. For example, if the blink rate is above a threshold, the user may be disturbed by the brightness of the light source, leading to the increased blink rate. Thus, the processing circuitry 134 may generate a display signal based on the blink rate to revoke a previous adjustment of the brightness of the light source.

Optionally or alternatively as described above the information about the desired brightness change can also be received from an input device. In an example, the processing circuitry may be further configured to reobtain information about a desired brightness change after adjusting the brightness of the light source and if the information indicates a further need of an adjustment of the light source to readjust the brightness of the light source. Thus, the input of the user can be considered for adjusting the brightness of the light source, e.g., in combination with the output signal of the eye-tracking sensor. For example, an adjustment caused by a second output signal of the eye-tracking sensor may increase a perceived resolution of the display but however decrease a user experience caused by the increased brightness of the light source. Thus, the user can indicate by the user input, e.g., using an input device that the prior brightness is preferred. The interface circuitry 134 may receive from the input device a signal and the processing circuitry 134 may generate a control to revoke the last adjustment of the brightness of the light source.

In an example, the imaging system 100 may be at least one of a surgical imaging system or a microscope system. Thus, the device 130 can be used for several optical systems.

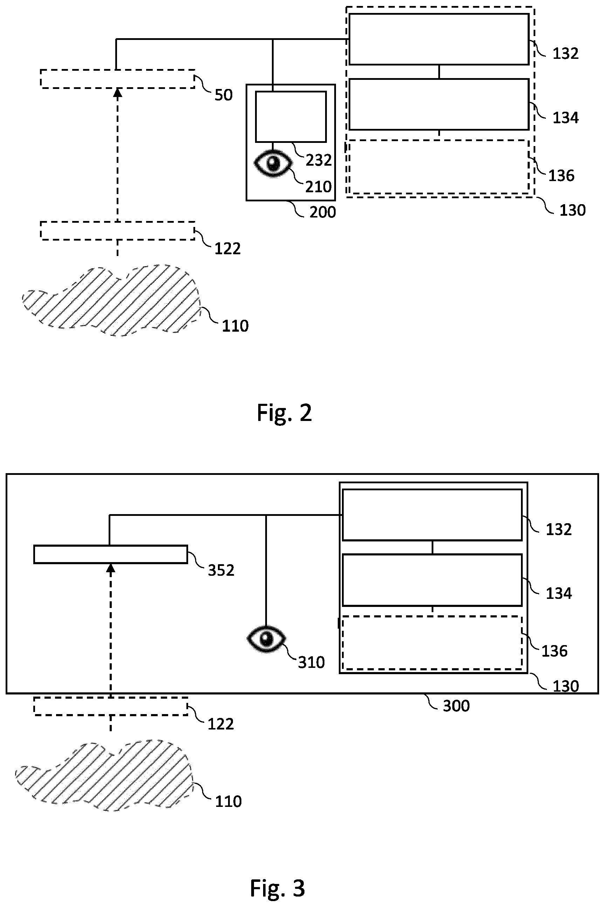

The imaging system 100 shown in Fig. 1b may further comprise an ocular as described with reference to Fig. 2 and a display device. Alternatively the imaging system 100 may further comprises a display apparatus as described with reference to Fig. 3.

In an example, the imaging system 100 may further comprise a sensor for determining an illumination of a surrounding of the display. Further, the processing circuity 134 may be configured to receive information from the sensor and to adjust the brightness of the display based on the information of the sensor. For example, the interface circuitry 132 may be configured to receive an output signal from the sensor and the processing circuitry 134 may be configured to generate a display signal for the display based on the output signal of the sensor. In this way, an impact of a backlight on the pupil of the eye of the user can be considered. For example, a target value may be adjusted based on the output signal of the sensor, e.g., a target value may be decreased when a light intensity of the backlight is high because the pupil of the eye of the user may be less dilated due to the backlight.

In an example, the processing circuity 134 may be further configured to obtain information about a distance between a user pupil and the display and to adjust the brightness of the display based on the information about the distance. For example, the interface circuitry 132 may be configured to receive from a distance sensor, e.g., part of the eye-tracking sensor, a distance signal comprising information indicative of a distance between the eye of the user and the display. In this way, a diameter of the pupil of the eye of the user used as aperture stop can be determined based on the distance. For example, the display signal may be generated based on the distance signal and the output signal of the eye-tracking sensor.

As shown in Fig. 1a the respective interface circuitry 132 is coupled to the respective processing circuitry 134 at the device 130. In examples the processing circuitry 134 may be implemented using one or more processing units, one or more processing devices, any means for processing, such as a processor, a computer or a programmable hardware component being operable with accordingly adapted software. Similar, the described functions of the processing circuitry 134 may as well be implemented in software, which is then executed on one or more programmable hardware components. Such hardware components may comprise a general-purpose processor, a Digital Signal Processor (DSP), a micro-controller, etc. The processing circuitry 134 is capable of controlling the interface circuitry 132, so that any data transfer that occurs over the interface circuitry 132 and/or any interaction in which the interface circuitry 132 may be involved may be controlled by the processing circuitry 134.

In an embodiment the device 130 may comprise a memory and at least one processing circuitry 134 operably coupled to the memory and configured to perform the below mentioned method.

In examples the interface circuitry 132 may correspond to any means for obtaining, receiving, transmitting or providing analog or digital signals or information, e.g., any connector, contact, pin, register, input port, output port, conductor, lane, etc. which allows providing or obtaining a signal or information. The interface circuitry 132 may be wireless or wireline and it may be configured to communicate, e.g., transmit or receive signals, information with further internal or external components.

The device 130 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the examples described below. The example shown in Fig. 1 may comprise one or more optional additional features corresponding to one or more aspects mentioned in connection with the proposed concept or one or more examples described below (e.g., Fig. 2 - 6).

Fig. 2 shows a block diagram of an example of an ocular 200 for an imaging system. The ocular 200 comprises an eye-tracking sensor 210 and interface circuitry 232 configured to transmit a measurement signal comprising information indicative of an output signal of the eye-tracking sensor 210 to a device as described with reference to Fig. 1.

The ocular 200 can be used in combination with the imaging system as described with reference to Fig. 1. For example, a fully optical view of a sample through a primary pair of oculars can be achieved. Thus, the eye-tracking sensor 210 can measure the pupil diameter of a user and may transmit information about the measurement signal to the device. The device may generate a control signal based on the output signal to adjust an illumination of the sample, e.g., by adjusting a radiation of an illumination source. In this way, the brightness of the image viewed by the ocular can be adjusted and thus also the perceived resolution of a display can be controlled.

More details and aspects are mentioned in connection with the examples described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 6).

Fig. 3 shows a block diagram of an example of a display apparatus 300. The display apparatus 300 comprises a device as described with reference to Fig. 1, a display 352 and an eye-tracking sensor 310. The display apparatus 300 may be used to adjust a brightness of the display 352 to a desired brightness, e.g., determined by a target value.

In an example, the display apparatus 300 may further comprise an optical component to adjust a visual range of the display apparatus. For example, the display apparatus 300 may be a head-mounted display. The optical component may be arranged between an eye of the user wearing the head-mounted display and a display of the head-mounted display. By arranging the optical component between the eye and the display a visual range of the user can be controlled. In this way, a user experience can be improved.

For example, the display can be within a distance of less than the typical visual range of a human eye (approximately 25 cm). Thus, a user of the head-mounted display may have problem to focus the display and/or to focus the display may stress the user. Using the optical component the image of the display can be moved to a distance which allows the user to focus the display without any problem. In this way, the user experience and/or the usability of the head-mounted display can be improved.

In an example, the display apparatus 300 may be at least one of a head-mounted display or a monitor communicatively connectable to a microscope. Thus, the display apparatus 300 may be used to display a magnification of a sample. For example, the display apparatus 300 may be used in combination with the imaging system as described with reference to Fig. 1.

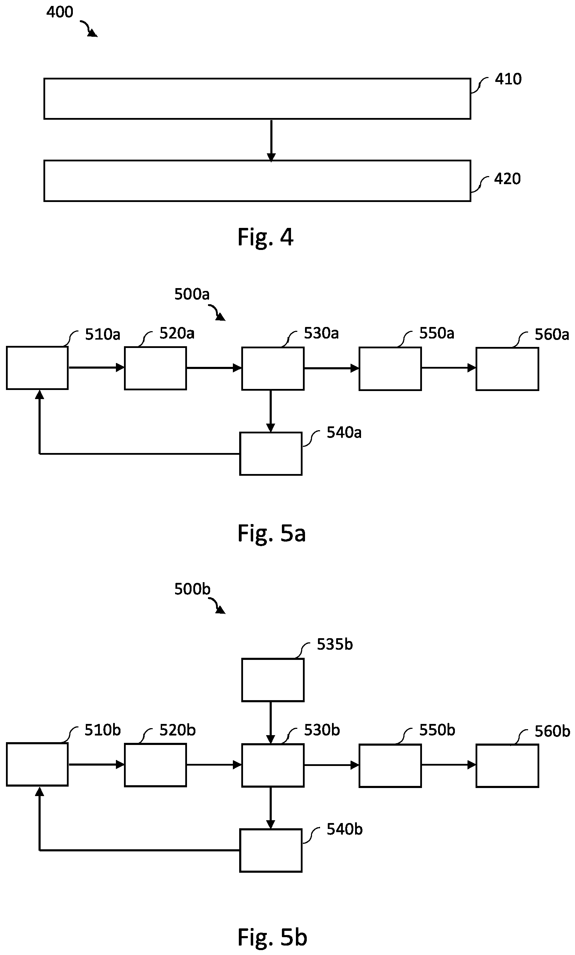

More details and aspects are mentioned in connection with the examples described above and/or below. The example shown in Fig. 3 may comprise one or more optional additional features corresponding to one or more aspects mentioned in connection with the proposed concept or one or more examples described above (e.g., Fig. 1-2) and/or below (e.g., Fig. 4 - 5).

Fig. 4 shows an example of method 400. The method 400 comprises obtaining 410 information about a desired brightness change of a light source of a display device and adjusting 420 a brightness of the light source based on the information to control the perceived resolution of a display of the display device. The method 400 may be performed by the device as described with reference to Fig. 1. In this way, the brightness of a display can be adjusted to control a perceived resolution of the display.

More details and aspects are mentioned in connection with the examples described above and/or below. The example shown in Fig. 4 may comprise one or more optional additional features corresponding to one or more aspects mentioned in connection with the proposed concept or one or more examples described above (e.g., Fig. 1-3) and/or below (e.g., Fig. 5 - 6).

Figs. 5a, 5b show examples of other methods 500a, 500b. The method 500a comprises several steps. In 510a a change of a brightness of a light source may be performed. In 520a a corresponding change of a pupil diameter of a user viewing the display is determined, e.g., by use of an eye-tracking sensor. The change of the pupil diameter results in 530a in a change of the imaging system performance, e.g., a perceived resolution of the display. If the change is not accepted in 540a a further change of the brightness of the light source may be performed. For example, the change may not be accepted because a target value of the pupil diameter is not reached, or a user input indicates that the user is not satisfied with the change of the brightness. If the change is accepted in 550a an imaging system can operate with an improved performance in 560a, e.g., with an increased perceived resolution of a display.

The method 500b comprises several steps. In S 10b a change of a brightness of a light source may be performed. In 520b a corresponding change of a pupil diameter of a user viewing the display is determined, e.g., by use of an eye-tracking sensor. The change of the pupil diameter results in 530b in a change of the imaging system performance, e.g., a perceived resolution of the display. The change of the imaging system performance can be controlled by an eye-tracking sensor. For example, a target value may be provided in 535b, e.g., a diameter of a pupil of the eye of the user. If the change is not accepted in 540b a further change of the brightness of the light source may be performed. For example, the change may not be accepted because the target value of the pupil diameter is not reached. If the change is accepted in 550b an imaging system may perform with an optimized performance in 560b, e.g., with an improved perceived resolution of a display.

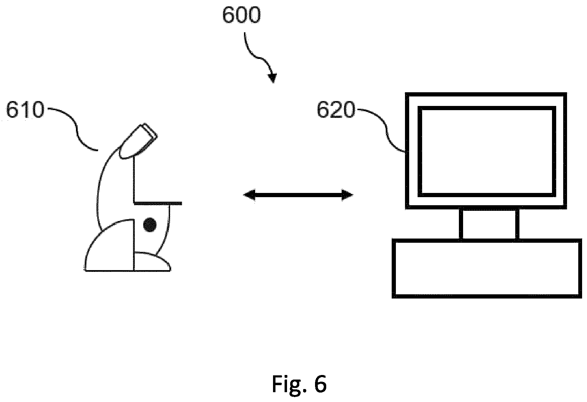

More details and aspects are mentioned in connection with the examples described above and/or below. The example shown in Fig. 5 may comprise one or more optional additional features corresponding to one or more aspects mentioned in connection with the proposed concept or one or more examples described above (e.g., Fig. 1-4) and/or below (e.g., Fig. 6).

Fig. 6 shows a schematic illustration of a system 600 configured to perform a method described herein. The system 600 comprises a microscope 610 and a computer system 620. The microscope 610 is configured to take images and is connected to the computer system 620. The computer system 620 is configured to execute at least a part of a method described herein. The computer system 620 may be configured to execute a machine learning algorithm. The computer system 620 and microscope 610 may be separate entities but can also be integrated together in one common housing. The computer system 620 may be part of a central processing system of the microscope 610 and/or the computer system 620 may be part of a subcomponent of the microscope 610, such as a sensor, an actor, a camera or an illumination unit, etc. of the microscope 610.

The computer system 620 may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system 620 may comprise any circuit or combination of circuits. In one embodiment, the computer system 620 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g., camera) or any other type of processor or processing circuit. Other types of circuits that may be included in the computer system 620 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 620 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 620 may also include a display device, one or more speakers, and a keyboard and/or controller, which can include a mouse, trackball, touch screen, voice-recognition device, or any other device that permits a system user to input information into and receive information from the computer system 620.

More details and aspects are mentioned in connection with the examples described above. The example shown in Fig. 6 may comprise one or more optional additional features corresponding to one or more aspects mentioned in connection with the proposed concept or one or more examples described above (e.g., Fig. 1 - 5).

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of reference Signs

110 sample
130 device
132 interface circuitry
134 processing circuitry
136 storage device
148 display device
100 imaging system
105 base unit
120 microscope
122 imaging sensor
150 head-mounted display
160 arm
200 ocular
210 eye-tracking sensor
232 interface circuitry
300 display apparatus
310 eye-tracking sensor
352 display
500a, 500b method for an imaging system
S 10a, S 10b change of a brightness
520a, 520b change of a pupil diameter
530a, 530b change of the system performance
535b providing target value
540a, 540b prove of system performance
550a, 550b prove of system performance
560a, 560b optimized performance
600 system
610 microscope
620 computer system

## Claims

1. A device (130) for controlling a perceived resolution of an imaging system, comprising:
interface circuitry (132) configured to communicate with a display device (148) of the imaging system; and
processing circuitry (134) configured to control the interface circuitry and to:
obtain information about a desired brightness change of a light source of the display device (148); and
adjust a brightness of the light source based on the information to control the perceived resolution of a display of the display device.

2. The device (130) according to claim 1, wherein the information is obtained by receiving an input of a user from an input device.

3. The device (130) according to any of the preceding claims, wherein
the interface circuitry (132) is further configured to communicate with an eye-tracking sensor; and
the information is obtained by receiving, from the eye-tracking sensor, an output signal comprising information indicative of a status of an eye of a user viewing a display of the display device.

4. The device (130) according to claim 3, wherein
the output signal comprises information indicative of a diameter of a pupil of the user.

5. The device (130) according to claim 3 or 4, wherein the processing circuity (134) is further configured to:
reobtain the information about a desired brightness change by a second output signal of the eye-tracking sensor after adjusting the brightness of the light source; and
adjust the brightness of the light source until a predefined value of the diameter of the pupil of the user is reached.

6. The device (130) according to any of the preceding claims, wherein the processing circuitry (134) is further configured to:
reobtain information about a desired brightness change after adjusting the brightness of the light source; and
if the information indicates a further need of an adjustment of the light source readjusting the brightness of the light source.

7. The device (130) according to any of the preceding claims, wherein the imaging system is at least one of a surgical imaging system or a microscope system.

8. An ocular (200) for an imaging system, comprising:
an eye-tracking sensor (210); and
interface circuitry (232) configured to transmit a measurement signal comprising information indicative of an output signal of the eye-tracking sensor to a device according to any of the preceding claims.

9. A display apparatus (300), comprising:
a device (130) according to any of the claims 1-7;
a display (352); and
an eye-tracking sensor (310).

10. The display apparatus (300) according to claim 9, further comprising
an optical component to adjust a visual range of the display apparatus.

11. The display apparatus (300) according to claim 9 or 10, wherein
the display apparatus is at least one of a head-mounted display or a monitor communicatively connectable to a microscope.

12. An imaging system (100), comprising:
a device (130) according to any of the claims 1 - 7.

13. The imaging system (100) according to claim 12, wherein the processing circuity (134) is further configured to:
obtain information about a distance between a user pupil and the display; and
adjust the brightness of the display based on the information about the distance.

14. Method (400) for controlling a perceived resolution of an imaging system, comprising:
obtaining (410) information about a desired brightness change of a light source of a display device; and
adjusting (420) a brightness of the light source based on the information to control the perceived resolution of a display of the display device.

15. A computer program having a program code for performing a method (400) according to claim 14 when the program is executed on processor.
